# EUROPEAN PATENT SPECIFICATION

(11) **EP 3 181 448 B1**
(45) Date of publication and mention of the grant of the patent: **04.12.2019**
(21) Application number: 16194128.1
(22) Date of filing: 17.10.2016
(51) Int. Cl.: B64C 27/10, B64C 7/00, B64C 23/06, B64C 27/82

(54) **VORTEX GENERATORS AND METHOD OF CREATING VORTICES ON AN AIRCRAFT**
WIRBELERZEUGER UND VERFAHREN ZUR ERZEUGUNG VON WIRBELN AN EINEM FLUGZEUG
GÉNÉRATEURS DE TOURBILLONS ET PROCÉDÉ DE CRÉATION DE REMOUS SUR UN AVION

(30) Priority: 18.12.2015 US 201562269351 P; 14.09.2016 US 201615265502
(43) Date of publication of application: 21.06.2017
(73) Proprietor: Sikorsky Aircraft Corporation, Stratford, CT 06615 (US)
(72) Inventor: Bowles, Patrick, Glastonbury, CT Connecticut 06033 (US); Botros, Barbara Brenda, Vernon, CT Connecticut 06066 (US); Min, ByungYoung, Glastonbury, CT Connecticut 06033 (US); Matalanis, Claude G., Longmeadow, MA Massachusetts 01106 (US); Wake, Brian E., South Glastonbury, CT Connecticut 06073 (US)
(74) Representative: Schmitt-Nilson Schraud Waibel Wohlfrom Patentanwälte Partnerschaft mbB

(56) References cited:
- US-A- 3 578 264
- US-A1- 2006 269 411
- US-A1- 2007 018 056
- US-A1- 2009 304 511
- US-A1- 2014 255 184
- US-A1- 2015 147 177

## Description

Exemplary embodiments pertain to the art of aircraft and, more particularly, to a vortex generator system and method for generating vortexes on a rotary wing aircraft.

Conventional rotary-wing aircraft have a forward airspeed limited by a number of factors. Among these is the existence of drag when traveling at high speeds. Various surfaces, both stationary and rotating, create drag as the aircraft moves through an airstream. Drag has a direct effect on aircraft power requirements, range, and efficiency. Accordingly, it is desirable to increase an overall airlift-to-equivalent-drag ratio (L/DE) to enhance an operational envelope of the rotary wing aircraft.

US 2006/269411 A1 shows a rotor hub fairing system including an upper hub fairing, a lower hub fairing and a shaft fairing therebetween. The rotor hub fairing system is sized and configured to reduce the overall drag on a dual, counter-rotating, coaxial rotor system. Preferably, the rotor hub fairing is fully integrated. Other aerodynamic structures, such as a horizontal splitter and/or a plurality of turning vanes may be mounted to the shaft fairing to facilitate flow around the upper and lower hub fairings to reduce flow separation and drag.

US 2015/147177 A1 shows a rotorcraft provided on top with a fairing arranged below the rotary wing of a main rotor of substantially vertical axis of the rotorcraft, and covering a mechanism enabling the blades of the rotary wing of the main rotor to be operated. The streamlined shape of the fairing is shaped longitudinally like a drop of water that is truncated in its rear portion. The truncated portion is provided with a transversely middle hump. Said hump is provided with projections in relief arranged as waves in a longitudinal succession extending along the side walls of the fairing.

US 2009/304511 A1 shows an aerodynamic shroud surrounding a hub to which blades are attached. The shroud has a textured outer surface that is configured so as to create a turbulent boundary layer for fluid flowing over the surface. The turbulent boundary layer delays flow separation from the shroud and reduces drag. The textured surface is provided by dimples in the surface or projections from the surface.

US 2007/018056 A1 shows a flow control device including a flow control surface over which fluid is designed to flow in a predetermined direction. Vortex generators are associated with the flow control surface. Each respective vortex generator has a pivot axis that forms an acute angle with respect to the predetermined direction and is capable of being positioned in both of an extended state, in which the respective vortex generators function to create a swirling fluid flow, and a retracted state, in which the respective vortex generators are pivoted via the pivot axis so as to lie adjacent to the flow control surface.

US 2014/255184 A1 shows a rotor blade including an active flap and an airflow disturber configured to selectively alter airflow across the active flap.

US 3 578 264 A shows an apparatus for the displacement or delay of the inception of flow separation of a fluid flowing over a curved surface, comprising a plurality of elements formed on said surface and defining with said surface concave vortex generating regions, with some of said elements being arranged in arrays defining a plurality of rows oriented generally transversely to the direction of flow with said rows being spaced in downstream relation to other of said rows.

Disclosed is a rotary wing aircraft including a fuselage having a plurality of surfaces, at least one engine mounted in the fuselage, and a rotor assembly including a rotor shaft, and plurality of rotor blades operatively connected to the rotor shaft. The rotor assembly includes a plurality of surface portions. A plurality of vortex generators is mounted relative to at least one of the plurality of surfaces of the fuselage and the plurality of surface portions of the rotor assembly. The plurality of vortex generators operate to disrupt a boundary layer of air flowing over the one of the plurality of surfaces and the plurality of surface portions to reduce drag on the one of the fuselage and the rotor assembly. The plurality of vortex generators comprise a plurality of selectively deployable vortex generators that are shiftable between a stowed position in which the plurality of selectively deployable vortex generators are not exposed to an airstream and a deployed position, wherein the plurality of selectively deployable vortex generators are exposed to the airstream. The rotor assembly further includes a shaft fairing extending about the rotor shaft and a hub member arranged adjacent to the plurality of rotor blades, the plurality of selectively deployable vortex generators being deployably mounted in the shaft fairing.

The plurality of vortex generators can comprise a plurality of guide vanes extending along the one of the shaft fairing and the hub member.

The plurality of guide vanes can include a first plurality of guide vanes extending along the one of the shaft fairing and the hub member at a first angle, and a second plurality of guide vanes extending along the one of the shaft fairing and the hub member at a second angle distinct from the first angle.

The plurality of vortex generators can comprise a plurality of generally circular bumps formed on the one of the shaft fairing and the hub member.

In addition to one or more of the features described above or below, further embodiments could include wherein the shaft fairing includes a first lateral side surface portion and a second, opposing lateral side surface portion, and the hub member includes an upper surface portion, the plurality of selectively deployable vortex generators selectively extending outwardly from one or more of the first and second lateral side surface portions of the shaft fairing and the upper surface portion of the hub member.

In addition to one or more of the features described above or below, further embodiments could include a controller operatively connected to the plurality of selectively deployable vortex generators, the controller operating to extend one or more of the selectively deployable vortex generators through one or more of the first and second lateral side surface portions of the shaft fairing and the upper surface portion of the hub member.

Also disclosed is a method of creating vortices on a rotary wing aircraft to decrease drag including guiding an airstream across at least one of a plurality of surfaces of a fuselage and a plurality of surface portions of a rotor assembly, interrupting the airstream with a plurality of vortex generators extending outwardly of the one of the plurality of surfaces of the fuselage and the plurality of surface portions of the rotor assembly, and reducing drag on the one of the plurality of surfaces of the fuselage and the plurality of surface portions of the rotor assembly by creating vortices in the airstream with the plurality of vortex generators wherein interrupting the airflow with the plurality of vortex generators includes selectively shifting the plurality of vortex generators between a stowed position in which the plurality of vortex generators are not exposed to the airstream and a deployed position, wherein the plurality of vortex generators are exposed to the airstream. The rotor assembly includes a shaft fairing extending about the rotor shaft and a hub member arranged adjacent to the plurality of rotor blades, the plurality of selectively deployable vortex generators being deployably mounted in the shaft fairing.

Positioning the plurality of guide vanes can include positioning a first plurality of guide vanes extending along the one of the shaft fairing and the hub member at a first angle, and a second plurality of guide vanes extending along the one of the shaft fairing and the hub member at a second angle distinct from the first angle.

Interrupting the airflow with the plurality of vortex generators can include positioning a plurality of generally circular bumps on one of a shaft fairing and a hub member of the rotor assembly.

### BRIEF DESCRIPTION OF THE DRAWINGS

The following descriptions should not be considered limiting in any way. With reference to the accompanying drawings, like elements are numbered alike:
FIG. 1 depicts a rotary wing aircraft, in accordance with an exemplary embodiment;
FIG. 2 is a perspective view of a rotary wing aircraft, in accordance with an exemplary embodiment;
FIG. 3 depicts a side view of a shaft fairing including a vortex generator, in accordance with an aspect of an exemplary embodiment;
FIG. 4 depicts a vortex generator, in accordance with an aspect of an exemplary embodiment;
FIG. 5 depicts a vortex generator, in accordance with another aspect of an exemplary embodiment;
FIG. 6 depicts a vortex generator, in accordance with yet another aspect of an exemplary embodiment;
FIG. 7 depicts a vortex generator, in accordance with still yet another aspect of an exemplary embodiment;
FIG. 8 depicts a rotor hub including vortex generators in accordance with an aspect of an exemplary embodiment;
FIG. 9 depicts selectively deployable vortex generators deployed from a shaft fairing in accordance with an aspect of an exemplary embodiment; and
FIG. 10 depicts the selectively deployable vortex generators of FIG, 9 in a non-deployed configuration.

A detailed description of one or more embodiments of the disclosed apparatus and method are presented herein by way of exemplification and not limitation with reference to the Figures.

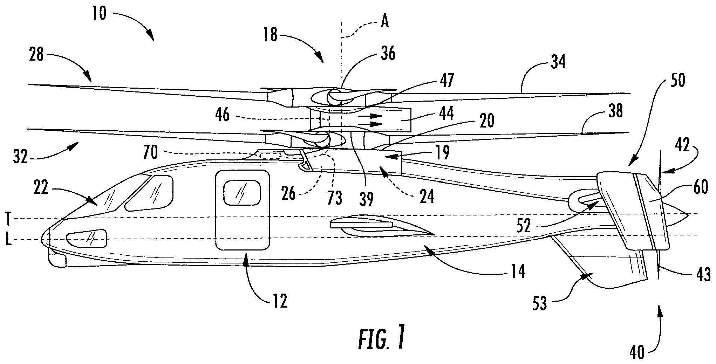

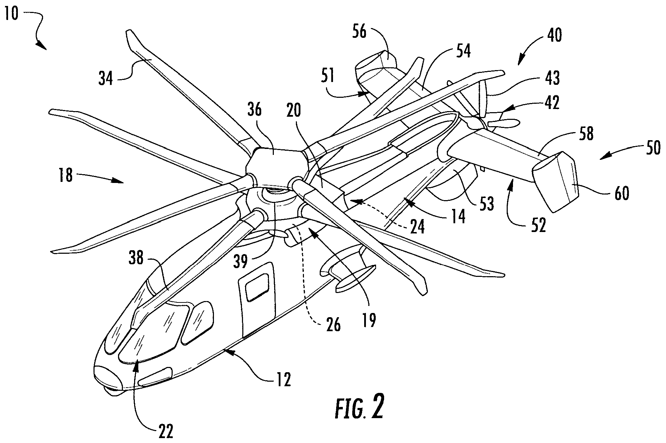

FIGs. 1 and 2 depict an exemplary embodiment of a rotary wing, vertical takeoff and land (VTOL) aircraft 10. The aircraft 10 includes an airframe or fuselage 12 with an extending tail 14. A dual, counter rotating, coaxial main rotor assembly 18 extends outwardly from a pylon 19 having an upper surface 20 of fuselage 12 and rotates about a main rotor axis, A. In an exemplary embodiment, the fuselage 12 includes a cockpit 22 having two seats for flight crew (e.g., pilot and co-pilot) and six seats for passengers (not shown). Main rotor assembly 18 is driven by a power source, for example, one or more engines 24 via a gearbox 26. Main rotor assembly 18 includes an upper rotor assembly 28 that may be driven in a first direction (e.g., counter-clockwise) about the main rotor axis, A, and a lower rotor assembly 32 that may be driven in a second direction (e.g., clockwise) about the main rotor axis, A, opposite to the first direction (i.e., counter rotating rotors).

In the exemplary embodiment shown, upper rotor assembly 28 includes a first plurality of rotor blades 34 supported by a first or upper rotor hub 36. Lower rotor assembly 32 includes a second plurality of rotor blades 38 supported by a second, or lower rotor hub 39. In some embodiments, the aircraft 10 may include a translational thrust system 40 having a propeller 42 located at the extending tail 14 to provide translational thrust (forward or rearward) for aircraft 10. Propeller 42 includes a plurality of blades 43.

Main rotor assembly 18 also includes a shaft fairing 44 generally located between and around the upper and lower rotor assemblies 28 and 32 such that lower rotor hub 39 may be at least partially contained therein. Shaft fairing 44 extends about a rotor shaft 46 operatively connecting upper rotor assembly 28 and engine(s) 24. Shaft fairing 44 extends between lower rotor hub 39 and an upper rotor hub member 47 arranged inwardly of upper rotor assembly 28 and operates to reduce drag which might otherwise exist at rotor shaft 46. First plurality of rotor blades 34 is connected to upper rotor hub 36 in a hingeless manner, also referred to as a rigid rotor system. Similarly, second plurality of rotor blades 38 is connected to lower rotor hub 39 in a hingeless manner.

Although a particular aircraft configuration is illustrated in this nonlimiting embodiment, other rotary wing aircraft will also benefit from embodiments of the invention. Although, the dual rotor system is depicted as coaxial, embodiments include dual rotor aircraft having non-coaxial rotors. Further, it should be understood that exemplary embodiments could also be incorporated into a rotary wing aircraft having a single rotor assembly.

Propeller 42, or translational thrust system 40, is connected to, and driven by, the engine 24 via the gearbox 26. Translational thrust system 40 may be mounted to the rear of the fuselage 12 with a translational thrust axis, T, oriented substantially horizontal and parallel to the aircraft longitudinal axis, L, to provide thrust for high-speed flight. The term "parallel" should be understood to include a translational thrust axis that is coincident with the longitudinal axis. Translational thrust axis, T, corresponds to the axis of rotation of propeller 42. While shown in the context of a pusher-prop configuration, it is understood that the propeller 42 could also be a more conventional puller prop or could be variably facing so as to provide yaw control in addition to, or instead of, translational thrust. It should be understood that any such system or other translational thrust systems may alternatively or additionally be utilized. Alternative translational thrust systems may include different propulsion forms, such as a jet engine.

In accordance with an aspect of an exemplary embodiment, propeller blades 43 of translational thrust system 40 may include a variable pitch. More specifically, the pitch of propeller blades 43 may be altered to change the direction of thrust (e.g., forward or rearward). In accordance with another aspect of an exemplary embodiment, extended tail 14 includes a tail section 50 including starboard and port horizontal stabilizers 51 and 52. Tail section 50 also includes a vertical stabilizer 53 that extends downward from extending tail 14. Starboard horizontal stabilizer 51 includes a starboard active elevator 54 and a starboard active rudder 56. Similarly, port horizontal stabilizer 52 includes a port active elevator 58 and a port active rudder 60. Elevators 54 and 58 and rudders 56 and 60 act as controllable surfaces, e.g., surfaces that alter a flight path/characteristics of aircraft 10.

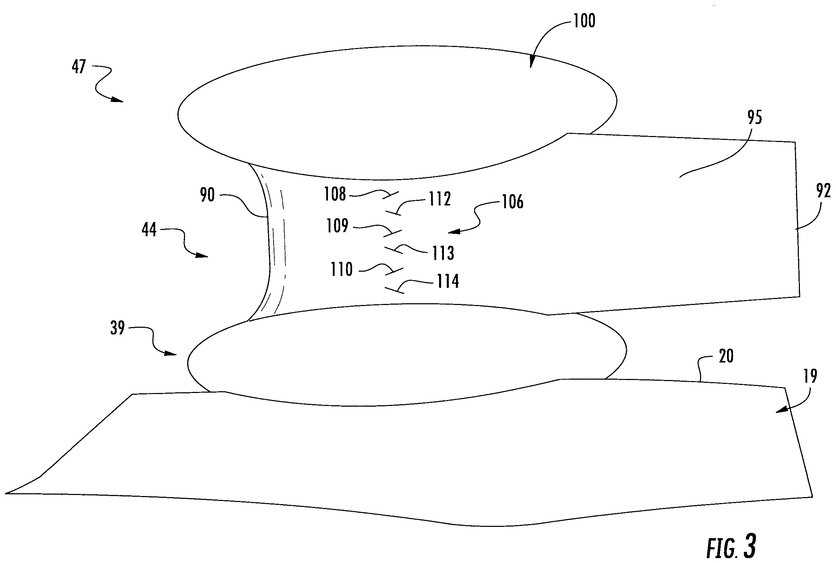

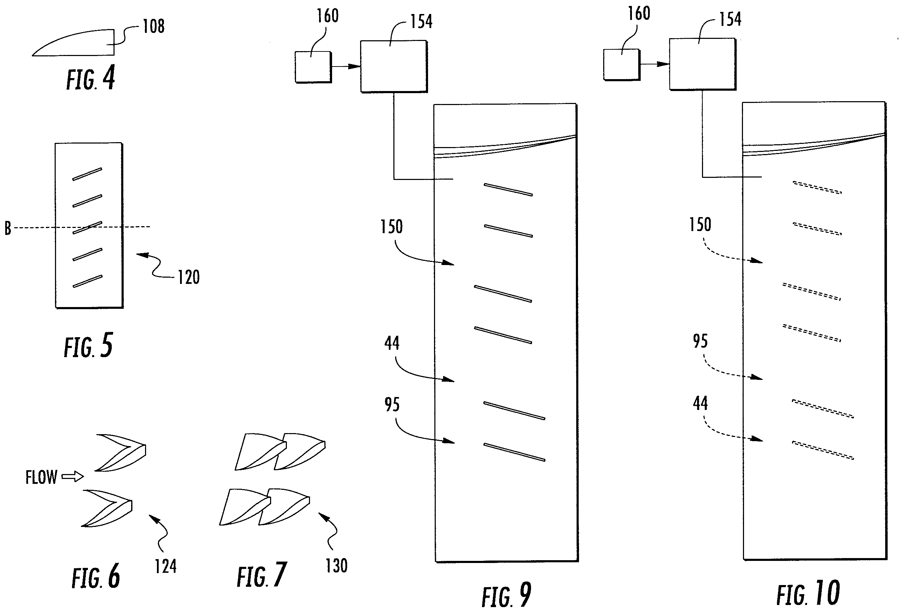

In accordance with an aspect of an exemplary embodiment illustrated in FIG. 3, wherein rotor assembly 18 has been removed for sake of clarity and understanding, shaft fairing 44 includes a forward or leading edge surface portion 90, and an aft or trailing edge surface portion 92. A first lateral side surface portion 95 extends between leading edge surface portion 90 and trailing edge surface portion 92. Similarly, a second, opposing lateral side surface portion (FIG. 7) extends between leading edge portion 90 and trailing edge portion 92. Also shown in FIG. 3, upper hub member 47 includes an upper surface portion 100.

In accordance with an aspect of an exemplary embodiment, aircraft 10 includes a plurality of vortex generators 106 fixedly mounted to first lateral side surface portion 95 of shaft fairing 44. It should be understood that additional vortex generators (not shown) may be provided on second lateral side surface portion 96. In the exemplary aspect shown, plurality of vortex generators 106 includes a first plurality of vortex generators 108-110 extending outwardly of first lateral side surface portion 95. A second plurality of vortex generators 112-114 also extend outwardly of first lateral side surface 95. First and second pluralities of vortex generators 108-110 and 112-114 may have a generally triangular profile such as shown in connection with vortex generator 108 in FIG. 4.

First plurality of vortex generators 108-110 are arranged at a first angle relative to a longitudinal axis "B" of shaft fairing 44. Second plurality of vortex generators 112-114 extend at a second angle relative to longitudinal axis "B" that is distinct from the first angle. In accordance with an aspect of an exemplary embodiment, first and second angles may be complimentary angles. Further, it should be understood that first and second pluralities of vortex generators 108-110 and 112-114 may extend outwardly of first lateral side surface portion 95 at a non-perpendicular angle which may vary for each vortex generator 108-110, and 112-114.

In accordance with another aspect of an exemplary embodiment, a plurality of vortex generators 120 illustrated in FIG. 5 may extend at a similar angle relative to longitudinal axis "B". The particular angle chosen, and whether the angles are different or similar, may depend on a desired rotational direction of produced vortices. For example, vortex generators 120 shown in FIG. 5 may produce co-rotating vortices that pass over shaft fairing 44. Further, the particular geometry and arrangement of vortex generators may vary. For example, FIG. 6 depicts vortex generators 124 having a generally wishbone shape and FIG. 7 depicts vortex generators 130 arranged in doublets.

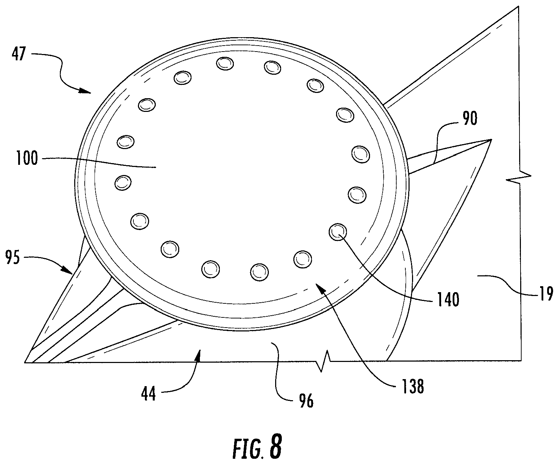

In accordance with another aspect of an exemplary embodiment illustrated in FIG. 8, a plurality of vortex generators 138 may be arranged on upper surface 100 of upper hub member 47. Vortex generators 138 may take the form of circular bumps such as indicated at 140. Vortex generators 138 are arranged annularly about upper surface 100. It should however be understood that the particular arrangement and location of vortex generators 138 may vary. Also, it should be understood that the particular shape of vortex generators 138 may vary.

FIG. 9 depicts a plurality of selectively deployable vortex generators 150 arranged on first lateral side surface portion 95 of shaft fairing 44. Selectively deployable vortex generators 150 are selectively shiftable between a first, or deployed position such as shown in FIG. 9 and a second, or stowed position, such as shown in FIG. 10. Selectively deployable vortex generators 150 may be coupled to a controller 154. Controller 154 may actively or passively facilitate shifting between the deployed and stowed configuration. Controller 154 may be coupled to one or more sensors 160 that detect air currents on shaft fairing 44. Based on inputs from sensors 160, controller 154 may deploy or retract selectively deployable vortex generators 150. When deployed, selectively deployable vortex generators 150 produce counter-rotating vortices on shaft fairing 44.

Vortex generators 106, in accordance with an aspect of an exemplary embodiment, are arranged at an angle to incident flow over a corresponding surface. In accordance with one example, vortex generators are arranged at an angle between about 4° and about 30° relative to incident flow. In accordance with another example, vortex generators may be arranged at an angle of about 20° relative to incident. In accordance with another aspect of an exemplary embodiment, vortex generators may include a chord length to height ratio of between about 2 to 6. In accordance with another aspect of an exemplary embodiment, the chord length to height ratio may be about 4. In accordance with yet another aspect of an exemplary embodiment, a ratio spacing between pairs of vortex generators relative to vortex generator height may be between about 0.1 to 6. In accordance with still yet another aspect, vortex generators 106 may have a height that is substantially equal to a height of a boundary layer of air flowing over the corresponding surface. Further, each vortex generator may include a thickness that is as thin as structurally feasible. In accordance with yet another aspect, vortex generators may be placed at a position on the corresponding surface that enhances drag reduction while also achieving a desired separation reduction. It should also be understood that while described in terms of reducing drag on a shaft fairing and a hub, exemplary embodiments could be employed on other surfaces of the aircraft. Further, it should be understood that the exemplary embodiments are not limited to deployment on rotary wing aircraft and could be utilized on other aircraft designed such as fixed wing aircraft, as well as manned and un-manned aircraft. Additionally, while shown on the shaft fairing, deployable vortex generators may be provided on other surfaces such as on the upper surface of the fuselage, and the upper and/or side surfaces of the upper hub member and side surfaces of pylon 19.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A rotary wing aircraft (10) comprising:
a fuselage (12) including a plurality of surfaces;
at least one engine (24) mounted in the fuselage (12);
a rotor assembly (18) including a rotor shaft (46) and plurality of rotor blades (34) operatively connected to the rotor shaft (46), the rotor assembly (18) including a plurality of surface portions; and
a plurality of vortex generators (106,108,110,112,114,120,124,130,138,150) mounted relative to at least one of the plurality of surfaces of the fuselage (12) and the plurality of surface portions of the rotor assembly (18), the plurality of vortex generators (106,108,110,112,114,120,124,130,138,150) operating to disrupt a boundary layer of air flowing over the at least one of the plurality of surfaces and the plurality of surface portions to reduce drag on the one of the fuselage (12) and the rotor assembly (18);
wherein the plurality of vortex generators (106,108,110,112,114,120,124,130,138,150) comprise a plurality of selectively deployable vortex generators (150) that are shiftable between a stowed position in which the plurality of selectively deployable vortex generators (150) are not exposed to an airstream and a deployed position, wherein the plurality of selectively deployable vortex generators (150) are exposed to the airstream;
**characterized in that**
the rotor assembly (18) includes a shaft fairing (44) extending about the rotor shaft (46) and a hub member (47) arranged adjacent to the plurality of rotor blades (34), the plurality of selectively deployable vortex generators (150) being deployably mounted in the shaft fairing (44).

2. The rotary wing aircraft according to claim 1, wherein the plurality of vortex generators comprise a plurality of generally circular bumps (140) formed on the one of the shaft fairing (44) and the hub member (47).

3. The rotary wing aircraft according to claim 2, wherein the plurality of generally circular bumps (140) are arranged annularly about an upper surface (100) of the hub member (47)

4. The rotary wing aircraft (10) according to claim 1, wherein the shaft fairing (44) includes a first lateral side surface portion (95) and a second, opposing lateral side surface portion (96), and the hub member (47) includes an upper surface portion (100), the plurality of selectively deployable vortex generators (150) selectively extending outwardly from one or more of the first and second lateral side surface portions (95,96) of the shaft fairing (44) and the upper surface portion (100) of the hub member (47).

5. The rotary wing aircraft (10) according to claim 4, further comprising a controller (154) operatively connected to the plurality of selectively deployable vortex generators (150), the controller (154) operating to extend one or more of the selectively deployable vortex generators (150) through one or more of the first and second lateral side surface portions (95,96) of the shaft fairing (44) and the upper surface portion (100) of the hub member (47).

6. A method of decreasing drag on a surface of a rotary wing aircraft (10) comprising:
guiding an airstream across at least one of a plurality of surfaces of a fuselage (12) and a plurality of surface portions of a rotor assembly (18);
interrupting the airstream with a plurality of vortex generators (106,108,110,112,114,120,124,130,138,150) extending outwardly of the one of the plurality of surfaces of the fuselage (12) and the plurality of surface portions of the rotor assembly (18); and
reducing drag on the one of the plurality of surfaces of the fuselage (12) and the plurality of surface portions of the rotor assembly (18) by creating vortices in the airstream with the plurality of vortex generators;
wherein interrupting the airflow with the plurality of vortex generators (106,108,110,112,114,120,124,130,138,150) includes selectively shifting the plurality of vortex generators (150) between a stowed position in which the plurality of vortex generators (150) are not exposed to the airstream and a deployed position, wherein the plurality of vortex generators (150) are exposed to the airstream;
**characterized in that**
the rotor assembly (18) includes a shaft fairing (44) extending about the rotor shaft (46) and a hub member (47) arranged adjacent to the plurality of rotor blades (34), the plurality of selectively deployable vortex generators (150) being deployably mounted in the shaft fairing (44).

## Patentansprüche

1. Drehflügelflugzeug (10), umfassend:
einen Rumpf (12), beinhaltend eine Vielzahl von Flächen;
zumindest ein Triebwerk (24), das in dem Rumpf (12) montiert ist;
eine Rotorbaugruppe (18), beinhaltend eine Rotorwelle (46) und eine Vielzahl von Rotorblättern (34), die mit der Rotorwelle (46) wirkverbunden ist, wobei die Rotorbaugruppe (18) eine Vielzahl von Flächenabschnitten beinhaltet; und
eine Vielzahl von Wirbelerzeugern (106, 108, 110, 112, 114, 120, 124, 130, 138, 150), die in Bezug auf zumindest eines aus der Vielzahl von Flächen des Rumpfes (12) und der Vielzahl von Flächenabschnitten der Rotorbaugruppe (18) montiert sind, wobei die Vielzahl von Wirbelerzeugern (106, 108, 110, 112, 114, 120, 124, 130, 138, 150) betrieben ist, um eine Grenzschicht von Luft, die über zumindest eines aus der Vielzahl von Flächen und der Vielzahl von Flächenabschnitten strömt, zu unterbrechen, um den Widerstand an einem von dem Rumpf (12) und der Rotorbaugruppe (18) zu reduzieren;
wobei die Vielzahl von Wirbelerzeugern (106, 108, 110, 112, 114, 120, 124, 130, 138, 150) eine Vielzahl von wahlweise einsetzbaren Wirbelerzeugern (150) umfasst, die zwischen einer verstauten Position, in der eine Vielzahl von wahlweise einsetzbaren Wirbelerzeugern (150) nicht einem Luftstrom ausgesetzt ist, und einer eingesetzten Position, in der die Vielzahl von wahlweise einsetzbaren Wirbelerzeugern (150) dem Luftstrom ausgesetzt ist, wechselbar ist;
**dadurch gekennzeichnet, dass**
die Rotorbaugruppe (18) eine Wellenverkleidung (44), die um die Rotorwelle (46) verläuft, und ein Nabenelement (47), das neben der Vielzahl von Rotorblättern (34) angeordnet ist, beinhaltet, wobei die Vielzahl von wahlweise einsetzbaren Wirbelerzeugern (150) in der Wellenverkleidung (44) einsetzbar montiert ist.

2. Drehflügelflugzeug nach Anspruch 1, wobei die Vielzahl von Wirbelerzeugern eine Vielzahl von im Allgemeinen kreisförmigen Erhebungen (140) umfasst, die an einem von der Wellenverkleidung (44) und dem Nabenelement (47) gebildet sind.

3. Drehflügelflugzeug nach Anspruch 2, wobei die Vielzahl von im Allgemeinen kreisförmigen Erhebungen (140) ringförmig um eine obere Fläche (100) des Nabenelements (47) angeordnet ist.

4. Drehflügelflugzeug (10) nach Anspruch 1, wobei die Wellenverkleidung (44) einen ersten seitlichen Seitenflächenabschnitt (95) und einen zweiten, gegenüberliegenden seitlichen Seitenflächenabschnitt (96) beinhaltet und das Nabenelement (47) einen oberen Flächenabschnitt (100) beinhaltet, wobei die Vielzahl von wahlweise einsetzbaren Wirbelerzeugern (150) wahlweise von einem oder mehreren des ersten und des zweiten seitlichen Seitenflächenabschnitts (95,96) der Wellenverkleidung (44) und dem oberen Flächenabschnitt (100) des Nabenelements (47) nach außen verläuft.

5. Drehflügelflugzeug (10) nach Anspruch 4, ferner umfassend eine Steuerung (154), die mit der Vielzahl von wahlweise einsetzbaren Wirbelerzeugern (150) wirkverbunden ist, wobei die Steuerung (154) dazu betrieben ist, einen oder mehrere der wahlweise einsetzbaren Wirbelerzeuger (150) durch einen oder mehrere von dem ersten und dem zweiten seitlichen Seitenflächenabschnitt (95, 96) der Wellenverkleidung (44) und dem oberen Flächenabschnitt (100) des Nabenelements (47) verlaufen zu lassen.

6. Verfahren zum Verringern von Widerstand auf einer Fläche eines Drehflügelflugzeugs (10), umfassend:
Führen eines Luftstroms über zumindest eines aus einer Vielzahl von Flächen eines Rumpfes (12) und einer Vielzahl von Flächenabschnitten einer Rotorbaugruppe (18);
Unterbrechen des Luftstroms mit einer Vielzahl von Wirbelerzeugern (106, 108, 110, 112, 114, 120, 124, 130, 138, 150), die von einem aus der Vielzahl von Flächen des Rumpfes (12) und der Vielzahl von Flächenabschnitten der Rotorbaugruppe (18) nach außen verlaufen; und
Reduzieren von Widerstand an dem einen aus der Vielzahl von Flächen des Rumpfes (12) und der Vielzahl von Flächenabschnitten der Rotorbaugruppe (18) durch Erzeugen von Wirbeln in dem Luftstrom mit der Vielzahl von Wirbelerzeugern;
wobei das Unterbrechen des Luftstroms mit der Vielzahl von Wirbelerzeugern (106, 108, 110, 112, 114, 120, 124, 130, 138, 150) wahlweises Wechseln der Vielzahl von Wirbelerzeugern (150) zwischen einer verstauten Position, in der eine Vielzahl von Wirbelerzeugern (150) nicht dem Luftstrom ausgesetzt ist, und einer eingesetzten Position, in der die Vielzahl von Wirbelerzeugern (150) dem Luftstrom ausgesetzt ist, beinhaltet; **dadurch gekennzeichnet, dass**
die Rotorbaugruppe (18) eine Wellenverkleidung (44), die um die Rotorwelle (46) verläuft, und ein Nabenelement (47), das neben der Vielzahl von Rotorblättern (34) angeordnet ist, beinhaltet, wobei die Vielzahl von wahlweise einsetzbaren Wirbelerzeugern (150) in der Wellenverkleidung (44) einsetzbar montiert ist.

## Revendications

1. Avion à voilure tournante (10) comprenant :
un fuselage (12) comprenant une pluralité de surfaces ;
au moins un moteur (24) monté dans le fuselage (12) ;
un ensemble rotor (18) comprenant un arbre de rotor (46) et une pluralité d'aubes de rotor (34) reliées de manière opérationnelle à l'arbre de rotor (46), l'ensemble rotor (18) comprenant une pluralité de parties de surface ; et
une pluralité de générateurs de tourbillons (106, 108, 110, 112, 114, 120, 124, 130, 138, 150) montés par rapport à au moins une de la pluralité de surfaces du fuselage (12) et de la pluralité de parties de surface de l'ensemble rotor (18), la pluralité de générateurs de tourbillons (106, 108, 110, 112, 114, 120, 124, 130, 138, 150) fonctionnant pour interrompre une couche limite d'air s'écoulant sur l'une au moins de la pluralité de surfaces et de la pluralité de parties de surface afin de réduire une traînée sur l'un du fuselage (12) et de l'ensemble rotor (18) ;
dans lequel la pluralité de générateurs de tourbillons (106, 108, 110, 112, 114, 120, 124, 130, 138, 150) comprend une pluralité de générateurs de tourbillons (150) à déploiement sélectif qui peuvent être déplacés entre une position repliée dans laquelle la pluralité de générateurs de tourbillons (150) à déploiement sélectif ne sont pas exposés à un courant d'air et une position déployée, dans lequel la pluralité de générateurs de tourbillons (150) à déploiement sélectif sont exposés au courant d'air ;
**caractérisé en ce que**
l'ensemble rotor (18) comprend un carénage d'arbre (44) s'étendant autour de l'arbre de rotor (46) et un élément de moyeu (47) disposé adjacent à la pluralité d'aubes de rotor (34), la pluralité de générateurs de tourbillons (150) à déploiement sélectif étant montés de manière déployable dans le carénage d'arbre (44).

2. Avion à voilure tournante selon la revendication 1, dans lequel la pluralité de générateurs de tourbillons comprend une pluralité de bosses généralement circulaires (140) formées sur l'un du carénage d'arbre (44) et de l'élément de moyeu (47).

3. Avion à voilure tournante selon la revendication 2, dans lequel la pluralité de bosses généralement circulaires (140) sont agencées de façon annulaire autour d'une surface supérieure (100) de l'élément de moyeu (47).

4. Avion à voilure tournante (10) selon la revendication 1, dans lequel le carénage d'arbre (44) comprend une première partie de surface du côté latéral (95) et une seconde partie de surface du côté latéral opposée (96), et l'élément de moyeu (47) comprend une partie de surface supérieure (100), la pluralité de générateurs de tourbillons (150) à déploiement sélectif s'étendant sélectivement vers l'extérieur depuis une ou plusieurs des première et seconde parties de surface du côté latéral (95, 96) du carénage d'arbre (44) et la partie de surface supérieure (100) de l'élément de moyeu (47).

5. Avion à voilure tournante (10) selon la revendication 4, comprenant en outre un dispositif de commande (154) relié de manière opérationnelle à la pluralité de générateurs de tourbillons (150) à déploiement sélectif, le dispositif de commande (154) fonctionnant pour étendre un ou plusieurs des générateurs de tourbillons (150) à déploiement sélectif à travers une ou plusieurs des première et seconde parties de surface du côté latéral (95, 96) du carénage d'arbre (44) et la partie de surface supérieure (100) de l'élément de moyeu (47).

6. Procédé de réduction d'une traînée sur une surface d'un avion à voilure tournante (10) comprenant :
l'orientation d'un courant d'air à travers au moins une pluralité de surfaces d'un fuselage (12) et une pluralité de parties de surface d'un ensemble rotor (18) ;
l'interruption du courant d'air avec une pluralité de générateurs de tourbillons (106, 108, 110, 112, 114, 120, 124, 130, 138, 150) s'étendant vers l'extérieur de l'une de la pluralité de surfaces du fuselage (12) et de la pluralité de parties de surface de l'ensemble rotor (18) ; et
la réduction d'une traînée sur l'une de la pluralité de surfaces du fuselage (12) et de la pluralité de parties de surface de l'ensemble rotor (18) en créant des remous dans le courant d'air avec la pluralité de générateurs de tourbillons ;
dans lequel l'interruption du courant d'air avec la pluralité de générateurs de tourbillons (106, 108, 110, 112, 114, 120, 124, 130, 138, 150) comprend le décalage sélectif de la pluralité de générateurs de tourbillons (150) entre une position repliée dans laquelle la pluralité de générateurs de tourbillons (150) ne sont pas exposés au courant d'air et une position déployée, dans lequel la pluralité de générateurs de tourbillons (150) sont exposés au courant d'air ;
**caractérisé en ce que**
l'ensemble rotor (18) comprend un carénage d'arbre (44) s'étendant autour de l'arbre de rotor (46) et un élément de moyeu (47) disposé adjacent à la pluralité d'aubes de rotor (34), la pluralité de générateurs de tourbillons (150) à déploiement sélectif étant montés de manière déployable dans le carénage d'arbre (44).
